**Europäisches Patentamt**

**European Patent Office**

**Office européen des brevets**

(19)

(11) **EP 1 574 850 A1**

(12) **EUROPÄISCHE PATENTANMELDUNG**

(43) Veröffentlichungstag:
**14.09.2005 Patentblatt 2005/37**

(51) Int Cl.$^7$: **G01N 27/90**

(21) Anmeldenummer: **04005462.9**

(22) Anmeldetag: **08.03.2004**

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL LT LV MK**

(71) Anmelder: **SIEMENS AKTIENGESELLSCHAFT**
**80333 München (DE)**

(72) Erfinder:
• **Daalmans, Gabriel**
  **91315 Höchstadt (DE)**
• **Steck, Martin**
  **91058 Erlangen (DE)**

(54) **Vorrichtung zur zerstörungsfreien Erfassung von tiefen Defekten in elektrisch leitenden Materialien**

(57) Vorrichtung zur zerstörungsfreien Erfassung von tiefliegenden Defekten in elektrisch leitenden Materialien mit einer Erregereinrichtung mit Induktionsspulen zur Erzeugung niederfrequenter Wirbelströme im Material und mit einer Empfangseinrichtung für die durch die Defekte veränderten Magnetfelder der Wirbelströme, wobei die Empfangseinrichtung Gradiometer-Magnetfeldsensoren (2-5) mit integrierter Brückenschaltung enthält.

FIG 1

**Beschreibung**

Die Erfindung bezieht sich auf eine Vorrichtung zur zerstörungsfreien Erfassung von tiefliegenden Defekten in elektrisch leitenden Materialien mit einer Erregereinrichtung mit Induktionsspulen zur Erzeugung niederfrequenter Wirbelströme im Material und mit einer Empfangseinrichtung für die durch die Defekte veränderten Magnetfelder der Wirbelströme.

Die klassische Lösung des Problems der zerstörungsfreien Erfassung von tiefen Defekten in elektrisch leitenden Materialien ist die Anwendung von Niederfrequenz-Wirbelstromverfahren mit Induktionsspulen zum Erregen und zum Detektieren. Dieses Verfahren zeigt eine Empfindlichkeit auf, die stark abhängig von der Erregerfrequenz ist und bei den niedrigen Frequenzen richtiggehend einbricht. Die Schwäche des Sensors wird üblicherweise dadurch zu kompensieren versucht, dass man den Erregerstrom erhöht. Beim Stand der Technik wurde kein besonderer Wert gelegt auf das Verhindern von induktiven Signalen, die besonders bei den höheren Frequenzen (kHz-Bereich) die Magnetfeldsignale leicht übertreffen können.

$$V_{Det} = V(B) + V(\delta B/\delta t)$$

mit $V(B) < V(\delta B/\delta t)$ für höhere Frequenzen.

Die induktiven Signale sind aus zwei Gründen sehr unangenehm. Erstens kann es zu zusätzlichen Abhebesignalen kommen, die als Defektsignal wahrgenommen werden und zweitens ist es nicht mehr möglich, eine quantitative zerstörungsfreie Werkstoffprüfung durchzuführen, da Amplitude und Phase der Detektorspannung verfälscht sind.

Der Erfindung liegt daher die Aufgabe zugrunde, eine Vorrichtung der eingangs beschriebenen Art dahingehend weiterzubilden, dass sie vorteilhaft über einen größeren Frequenzbereich eingesetzt werden kann und somit zum einen tiefe verdeckte Fehler und Oberflächenfehler detektieren kann, zum anderen ein quantitativer Zusammenhang zwischen Detektorsignal und Defektgröße und Tiefe ermöglicht wird und dass schließlich auch in elektromagnetisch gestörter Umgebung die Qualität des Sensors voll genutzt werden kann.

Zur Lösung dieser Aufgabe ist erfindungsgemäß vorgesehen, dass die Empfangseinrichtung Gradiometer-Magnetfeldsensoren in integrierter Brückenschaltung enthält, wobei in Weiterbildung der Erfindung die integrierte Brückenschaltung bevorzugt eine gefaltete Schleifenfläche aufweist.

Durch den Einsatz von Gradiometer-Magnetfeldsensoren, wobei hierfür magnetoresistive Wandler beliebiger Bauart verwendet werden können, ergibt sich zwar ein geringeres Signal als bei den bisher verwendeten Induktionsspulen, dafür aber ein besserer Signalrauschabstand. Durch die integrierte Brückenschaltung, bei der quasi die eine Hälfte der Brücke in die andere eingeklappt ist, sodass praktisch keine nennenswerte Schleifenfläche mehr verbleibt, in der durch Wechsel der Magnetfelder Spannungen induziert werden könnten, die dieses Messergebnis verfälschen, wird die erfindungsgemäße Vorrichtung in hohem Maße unabhängig von äußeren Störfeldern, sodass neben sehr tiefen Niederfrequenzen auch höhere Frequenzen zum Einsatz kommen können.

Um mit einer Wirbelstrommethode Aussagen aus tiefen Werkstoffbereichen, also aus Tiefen größer 1 mm, zu bekommen, muss man sehr starke Wirbelstromfelder in der Tiefe des Bauteils erzeugen, was aber physikalisch durch den Skin-Effekt behindert wird. Tiefe Frequenzen dringen sehr tief in den Werkstoff ein, zeigen aber rein physikalisch eine schlechte Ortsauflösung und damit ist die nachweisbare Fehlergröße begrenzt. Höhere Frequenzen zeigen eine bessere Ortsauflösung aber mit steigender Frequenz wird die Messempfindlichkeit durch elektromagnetische Störeffekte immer mehr beschränkt.

Durch die erfindungsgemäße Vorrichtung lässt sich nun die Messempfindlichkeit dadurch steigern, dass elektromagnetische Störeffekte weitestgehend minimiert werden und es damit gelingt, auch mit höheren Frequenzen in tiefen Werkstoffbereichen zu arbeiten, also in Tiefen von ca. 10 mm.

Durch die vorstehend bereits angesprochene Erweiterung des erfindungsgemäßen Ansatzes, bei der die integrierte Brückenschaltung zusätzlich eine gefaltete Schleifenfläche aufweist, erhält man eine Anordnung, bei der die sehr geringe übrigbleibende und möglicherweise zur Induktion von Störspannungen zur Verfügung stehende Schleifenfläche in zwei Teile aufgeteilt ist, die gegenläufig durchflossen werden, sodass sich derartige induzierte Spannungen weitgehend aufheben.

Gemäß einem weiteren Merkmal der vorliegenden Erfindung kann die Brückenschaltung der Magnetfeldsensoren, deren Basislänge nicht größer als die maximale Prüftiefe sein sollte, auf einem kleinbauenden Chip angeordnet sein, der seinerseits wiederum bevorzugt auf einer mit einem Anschluss-Stecker versehenen Platine eines Wirbelstrommesskopfs angeordnet werden kann, wobei die Chipzuleitungen durch eine metallisierte Unterseite der Platine induktionsarm geschirmt sein können. Durch diese Maßnahme wird auch das mögliche Störpotential im Bereich der Zuleitungen ausgeschaltet, da es ja nicht alleine genügt, dass man Störspannungen am eigentlichen Messteil, also der integrierten Brückenschaltung aus Gradiometer-Magnetfeldsensoren vermeidet, sondern letztendlich würden in den Zuleitungen auftretende Störungen das Ergebnis in gleicher Weise verfälschen.

Die erfindungsgemäße Chip-Platine kann dabei in unterschiedlichen Niederfrequenzmessköpfen eingesetzt werden und zwar einmal derart, dass die Chip-Platine in eine umlaufende, das Erregerfeld erzeugende Induktionsspule ragt und dabei etwas in Richtung auf das zu untersuchende Werkstück aus dieser Induktionsspule nach vorne vorsteht. Zum anderen können die Induktionsspulen auch auf einem Joch angeordnet sein, zwischen dessen Schenkeln die Chip-Platine so einragt, dass das Erregerfeld im Wesentlichen senkrecht zum Chip verläuft. Diese Variante ist besonders geeignet für eine Prüfung bei sehr hoher Auflösung, da hierbei keine Magnetfeldkomponente des Erregerfeldes in einer Richtung parallel zur Chipfläche vorhanden ist, sodass der Chip das Erregerfeld quasi überhaupt nicht sieht und dadurch nicht direkt beeinflusst werden kann.

Weitere Vorteile, Merkmale und Einzelheiten der Erfindung ergeben sich aus der nachfolgenden Beschreibung einiger Ausführungsbeispiels sowie anhand der Zeichnung. Dabei zeigen:

Fig. 1     eine Ansicht eines Chips mit einer darauf angeordneten integrierten Brückenschaltung aus Gradiometer-Magnetfeldsensoren,

Fig. 2     eine abgewandelte Ausführungsform der Anordnung nach Fig. 1 mit zusätzlich gefalteter Schleifenfläche,

Fig. 3     eine schematische Anordnung eines Chips gemäß den Fig. 1 und 2 auf einer Chip-Platine mit Anschluss-Stecker und abgeschirmten Zuleitungen als Drauf - und Vorderansicht,

Fig. 4     einen Niederfrequenzmesskopf, wobei zwei unterschiedliche Varianten für die Erregung A und B angedeutet sind und

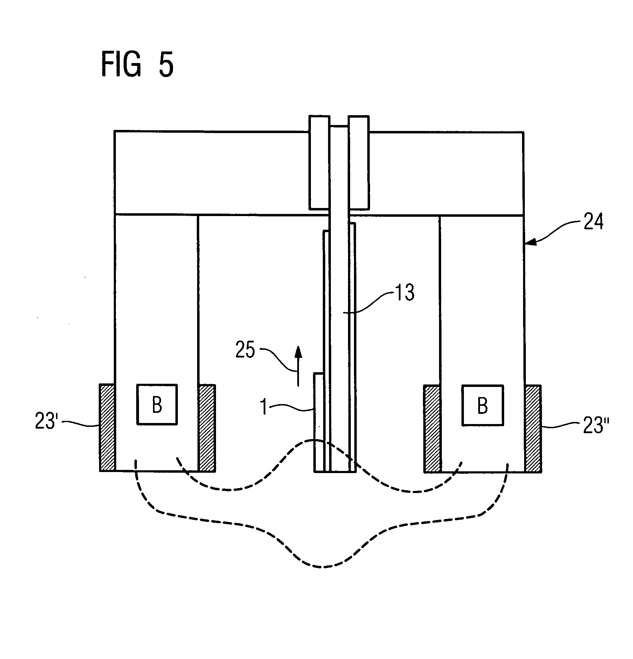

Fig. 5     eine um 90° gedrehte Seitenansicht der Anordnung nach Fig. 4, bei der Variante B der Erregung des Werkstücks mit einem Joch.

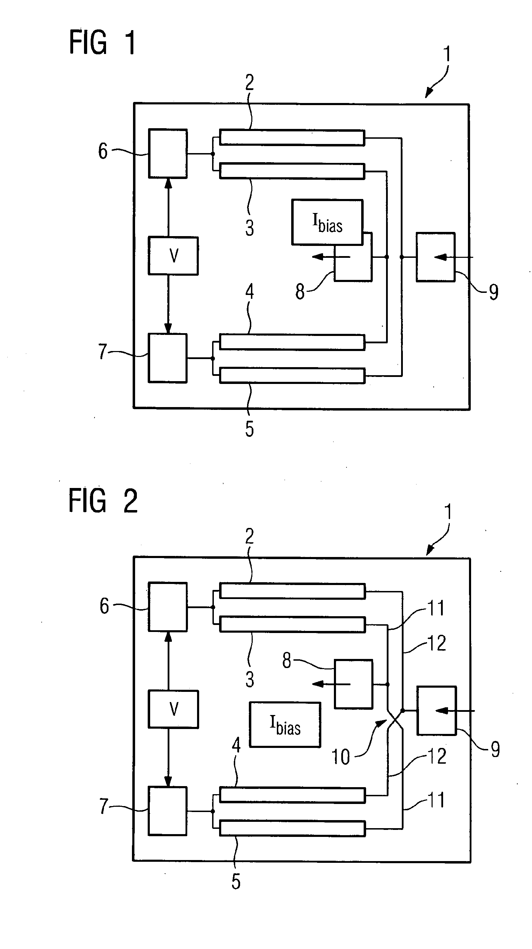

In Fig. 1 erkennt man einen Chip 1, auf dem eine integrierte Brückenschaltung aus vier magnetempfindlichen Widerständen 2 bis 5 angeordnet ist, wobei bei 6 und 7 Kontaktflächen zum Anschließen der Abnahmeleitungen für die sich ergebende Mess-Spannung V und bei 8 und 9 entsprechende Leiteranschlüsse zum Einspeisen eines Versorgungsstroms $I_{Bias}$ in die Wandlerbrücke angedeutet sind.

Bei der Anordnung nach Fig. 2 ist die Schleifenfläche zusätzlich gefaltet (siehe Kreuzungspunkt 10), der hier selbstverständlich isoliert übereinandergeführten Verbindungsleitungen 11 und 12.

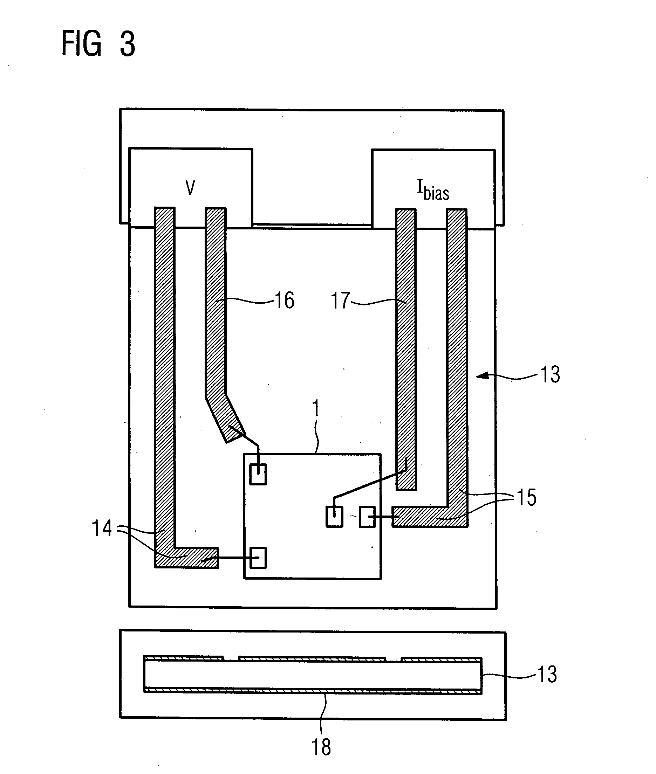

Eine solche induktionsarme Wandlerbrücke gemäß den Figuren 1 und 2 wird unter Vermeidung von wesentlichen induktiven Beiträgen in einem Wirbelstrom-Messkopf integriert. Dazu wird der Chip 1 (vgl. insbesondere Fig. 3) auf einer Chip-Platine 13 montiert, die neben den Zuleitungen 14 bis 17 auf der Chipseite eine elektrisch leitende Beschichtung 18 auf der Unterseite aufweist, wodurch gewährleistet ist, dass die Chip-Zuleitungen 14 bis 17 für Strom und Spannung induktionsarm sind. An das obere Ende der Platine 13 in Fig. 3 wird ein Stecker angesteckt.

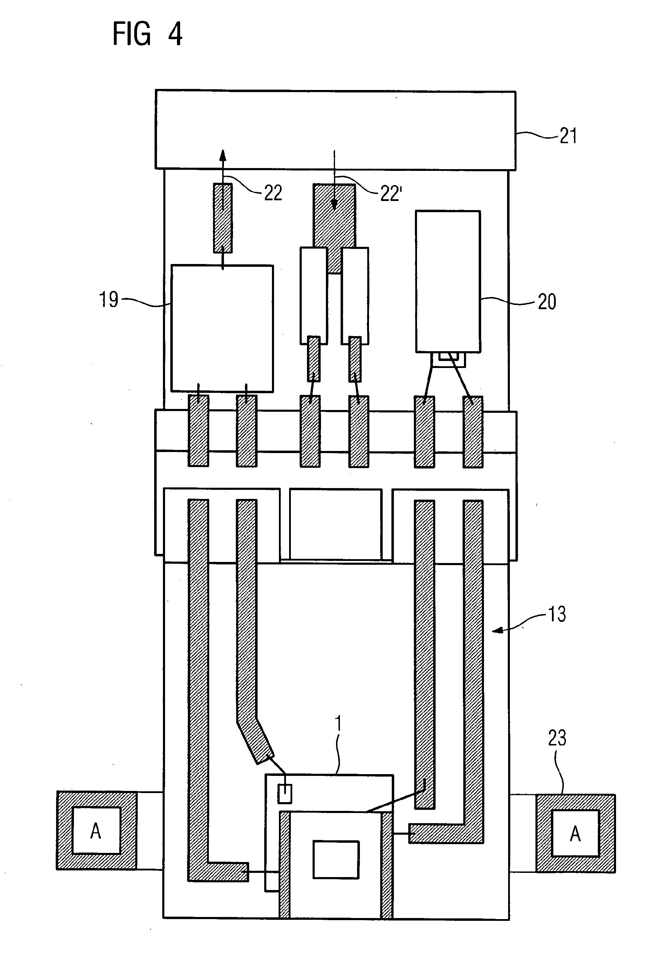

Bei der Ausführungsform wie sie in Fig. 4 dargestellt ist, wobei die Platine mit dem Chip identisch der Ausbildung nach Fig. 3 ist, ist zusätzlich noch ein Teil der Ansteuerschaltung mit einem Vorverstärker 19, einer Batterie 20 und einem Kabelstecker 21 zum Messgerät angedeutet. Der Pfeil 22' deutet den Erregerstrom an, während der Pfeil 22 die Signalausgangsspannung schematisch wiedergibt.

Die bei A dargestellte Variante zur Erregung der Wirbelströme im zu untersuchenden Material umfasst eine umlaufende Spule 23, durch die der auf der Chip-Platine 13 angeordnete Chip 1 nach vorne durchragt, dabei ist der Wandler dem Erregerfeld voll ausgesetzt. Durch die erfindungsgemäße Ausgestaltung der Brückenschaltung ist aber gewährleistet, dass die Erregung in der Brücke keinen wesentlichen Gradientenbeitrag erzeugt.

Noch geeigneter und weniger störanfällig ist die Variante B, bei der die Induktionsspulen 23' und 23'' auf einem Joch 24 angeordnet sind, in das der auf der Chip-Platine 13 angeordnete Chip 1 so einragt, dass keine Magnetfeldkomponente in Richtung des Pfeils 25 gegeben ist und somit der Chip das Erregerfeld, das gestrichelt eingezeichnet ist, praktisch gar nicht sieht.

Durch die erfindungsgemäße Ausbildung ergeben sich eine ganze Reihe von Vorteilen. Zum einen kann die Messvorrichtung nicht nur bei den kleinsten Frequenzen sondern auch im Frequenzbereich von 10 Hz bis 10 kHz eingesetzt werden, was eine in der Tiefe auflösende Betrachtung des Fehlers erlaubt. Zum anderen ermöglicht die Messvorrichtung eine quantitative Analyse der Abmessungen des Fehlers. Und zum dritten schließlich kann das erfindungsgemäße Messverfahren auch unter Widrigen Bedingungen durchgeführt werden, da äußere Störfelder die Messgenauigkeit praktisch nicht beeinträchtigen.

**Patentansprüche**

1. Vorrichtung zur zerstörungsfreien Erfassung von tiefliegenden Defekten in elektrisch leitenden Materialien mit einer Erregereinrichtung mit Induktionsspulen zur Erzeugung niederfrequenter Wirbelströme im Material und mit einer Empfangseinrichtung für die durch die Defekte veränderten Magnetfelder der Wirbelströme,
   **dadurch gekennzeichnet, dass**
   die Empfangseinrichtung Gradiometer-Magnetfeldsensoren (2-5) mit integrierter Brückenschaltung enthält.

2. Vorrichtung nach Anspruch 1,
   **dadurch gekennzeichnet, dass**
   die integrierte Brückenschaltung eine gefaltete Schleifenfläche aufweist.

**3.** Vorrichtung nach Anspruch 1 oder 2,
**dadurch gekennzeichnet, dass**
die Brückenschaltung der Magnetfeldsensoren (2-5), deren Basislänge nicht größer ist als die maximale Prüftiefe, auf einem kleinbauenden Chip (1) angeordnet ist.

**4.** Vorrichtung nach Anspruch 3,
**dadurch gekennzeichnet, dass**
der Chip (1) auf einer mit einem Anschluss-Stecker versehenen Chip-Platine (13) eines Wirbelstrommesskopfs angeordnet ist, wobei die Chipzuleitungen (14-17) durch eine metallisierte Beschichtung (18) der Unterseite der Chip-Platine (13) induktionsarm geschirmt sind.

**5.** Vorrichtung nach Anspruch 4,
**dadurch gekennzeichnet, dass**
die Chip-Platine (13) in eine umlaufende das Erregerfeld erzeugende Induktionsspule (23) ragt.

**6.** Vorrichtung nach Anspruch 4,
**dadurch gekennzeichnet, dass**
die Induktionsspulen (23', 23") auf einem Joch (24) angeordnet sind, zwischen dessen Schenkel die Chip-Platine (13) so einragt, dass das Erregerfeld im Wesentlichen senkrecht zum Chip (1) verläuft.

FIG 1

FIG 2

FIG 3

FIG 4

# FIG 5

**Europäisches Patentamt**

# EUROPÄISCHER RECHERCHENBERICHT

Nummer der Anmeldung

EP 04 00 5462

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | US 6 452 384 B1 (BAER LUDWIG ET AL) 17. September 2002 (2002-09-17) | 1 | G01N27/90 |
| A | * Spalte 2, Zeile 7 - Zeile 13 * * Spalte 4, Zeile 35 - Zeile 60 * * Spalte 5, Zeile 63 - Spalte 6, Zeile 4 * --- | 2-6 | |
| Y | DE 199 45 944 A (SIEMENS AG) 31. Mai 2001 (2001-05-31) | 1 | |
| A | * Spalte 1, Zeile 43 - Zeile 47 * * Spalte 4, Zeile 53 - Zeile 60 * --- | 2-6 | |
| Y | US 2002/060565 A1 (TONDRA MARK C) 23. Mai 2002 (2002-05-23) | 1 | |
| A | * Abbildungen 6,7 * * Absätze [0064]-[0066],[0089] * * Anspruch 7 * --- | 2-6 | |
| Y | INDECK R S ET AL: "A MAGNETORESISTIVE GRADIOMETER" IEEE TRANSACTIONS ON MAGNETICS, IEEE INC. NEW YORK, US, Bd. 24, Nr. 6, 1. November 1988 (1988-11-01), Seiten 2617-2619, XP000031789 ISSN: 0018-9464 | 1 | RECHERCHIERTE SACHGEBIETE (Int.Cl.7) G01N |
| A | * Seite 2618, Spalte 1, Absatz 1 * * Abbildung 3 * --- | 2-6 | |
| A | TREUTLER C P O: "Magnetic sensors for automotive applications" SENSORS AND ACTUATORS A, ELSEVIER SEQUOIA S.A., LAUSANNE, CH, Bd. 91, Nr. 1-2, 5. Juni 2001 (2001-06-05), Seiten 2-6, XP004239165 ISSN: 0924-4247 * Seite 5, Spalte 1, Zeile 7 - Zeile 13; Abbildung 8 * --- | 1-6 | |

-/--

Der vorliegende Recherchenbericht wurde für alle Patentansprüche erstellt

| Recherchenort | Abschlußdatum der Recherche | Prüfer |
|---|---|---|
| MÜNCHEN | 22. Juni 2004 | Stussi, E |

EPO FORM 1503 03.82 (P04C03)

**Europäisches Patentamt**

# EUROPÄISCHER RECHERCHENBERICHT

Nummer der Anmeldung

EP 04 00 5462

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | US 5 842 986 A (MASSENGILL R KEMP ET AL) 1. Dezember 1998 (1998-12-01) * Spalte 6, Zeile 45 - Zeile 49 * * Spalte 7, Zeile 27 - Zeile 44 * * Spalte 9, Zeile 3 - Zeile 9 * * Spalte 9, Zeile 61 - Spalte 10, Zeile 29 * ----- | 1-6 | |

RECHERCHIERTE SACHGEBIETE (Int.Cl.7)

Der vorliegende Recherchenbericht wurde für alle Patentansprüche erstellt

| Recherchenort | Abschlußdatum der Recherche | Prüfer |
|---|---|---|
| MÜNCHEN | 22. Juni 2004 | Stussi, E |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**EP 1 574 850 A1**

**ANHANG ZUM EUROPÄISCHEN RECHERCHENBERICHT
ÜBER DIE EUROPÄISCHE PATENTANMELDUNG NR.**  EP 04 00 5462

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-06-2004

| Im Recherchenbericht angeführtes Patentdokument | | Datum der Veröffentlichung | Mitglied(er) der Patentfamilie | | Datum der Veröffentlichung |
|---|---|---|---|---|---|
| US 6452384 | B1 | 17-09-2002 | WO | 9923484 A1 | 14-05-1999 |
| | | | EP | 1029237 A1 | 23-08-2000 |
| | | | JP | 2001522046 T | 13-11-2001 |
| DE 19945944 | A | 31-05-2001 | DE | 19945944 A1 | 31-05-2001 |
| US 2002060565 | A1 | 23-05-2002 | US | 6743639 B1 | 01-06-2004 |
| | | | WO | 0127592 A1 | 19-04-2001 |
| US 5842986 | A | 01-12-1998 | CA | 2258268 A1 | 31-12-1997 |
| | | | EP | 0917441 A1 | 26-05-1999 |
| | | | JP | 2001504714 T | 10-04-2001 |
| | | | US | 2002115925 A1 | 22-08-2002 |
| | | | US | 2002151779 A1 | 17-10-2002 |
| | | | WO | 9749334 A1 | 31-12-1997 |
| | | | US | 6208884 B1 | 27-03-2001 |
| | | | US | 2001012915 A1 | 09-08-2001 |
| | | | US | 2002077537 A1 | 20-06-2002 |

EPO FORM P0461

Für nähere Einzelheiten zu diesem Anhang : siehe Amtsblatt des Europäischen Patentamts, Nr.12/82